# FASCICULE DE BREVET EUROPEEN

(11) **EP 0 561 727 B1**
(45) Date de publication et mention de la délivrance du brevet: **14.05.1997**
(21) Numéro de dépôt: 93490006.9
(22) Date de dépôt: 19.03.1993
(51) Int. Cl.: H02B 1/03

(54) **Tableau de comptage de courant triphasé à basse tension**
Schalttafel für Niederspannungsdrehstromszähler
Low voltage, triphase current meter panel

(30) Priorité: 20.03.1992 FR 9203761
(43) Date de publication de la demande: 22.09.1993
(73) Titulaire: Avocat, Jean Paul, F-59552 Lambres-lez-Douai (FR)
(72) Inventeur: Avocat, Jean Paul, F-59552 Lambres-lez-Douai (FR)
(74) Mandataire: Lepage, Jean-Pierre

(56) Documents cités:
- EP-A- 0 227 498
- DE-A- 2 711 808
- DE-B- 1 275 182
- FR-A- 1 175 523
- FR-A- 1 486 450
- US-A- 3 183 408
- US-A- 3 628 097
- US-A- 4 906 059

## Description

La présente invention a pour objet un tableau de comptage de courant triphasé à basse tension, destiné notamment à l'industrie de la construction électrique et de la distribution de l'énergie électrique. Elle trouvera son application dans le domaine de la fabrication et de la construction de tableaux électriques ainsi que dans tous les secteurs industriels associés à la distribution du courant depuis un réseau de distribution jusqu'à une installation d'un abonné.

Dans le domaine de la distribution d'énergie électrique en basse tension de moyenne puissance, c'est-à-dire pour des courants de 50 à 500 ampères, on interpose actuellement un "tableau de comptage" entre le réseau de distribution et l'installation privée de l'abonné.

Ce tableau de comptage a une double fonction qui consiste :
- à permettre d'isoler l'installation de l'abonné du réseau de distribution général au moyen d'un dispositif de coupure de préférence condamnable,
- à délivrer aux compteurs d'énergie et autres appareils de mesure, par l'intermédiaire de transformateurs de mesure ou de réducteurs de courant, des courants réduits proportionnels aux courants circulant dans les conducteurs de puissance raccordant au réseau l'installation de l'abonné.

En ce qui concerne le dispositif de coupure, celui-ci se présente généralement sous la forme d'un ensemble de mâchoires spécialement étudiées dans lesquelles viennent s'installer des couteaux métalliques amovibles qui assurent la connexion ou des moyens de protection tels que des fusibles à couteaux.

Actuellement, les différents organes électriques sont regroupés à l'intérieur d'une armoire dans laquelle sont placées des bornes de raccordement des différents câbles venant du réseau de distribution. Ces câbles assurent la connexion entre le réseau de distribution et le dispositif de coupure placé avant les transformateurs de mesure et les bornes de raccordement des câbles d'alimentation à l'installation de l'abonné (installation à un seul sectionnement).

De plus, dans certains types d'installations, il existe également un sectionneur qui est disposé après les différents réducteurs de courant et permettant la coupure de l'installation vers l'abonné (installation à deux sectionnements).

On connaît du brevet US 4.906.059 un coffret à l'intérieur duquel sont placés un disjoncteur à fusible monté sur une bride fixée à la plaque de fond du coffret et des moyens de connexion également montés sur une bride fixée à la plaque de fond.

On connaît également du brevet EP 0.227.498 un dispositif de mesure centralisé pour installations électriques comportant notamment un boîtier isolant et des moyens de connexion électrique pour relier le dispositif de mesure au réseau d'alimentation et aux conducteurs d'exploitation des signaux de mesure.

Pour réaliser les tableaux de comptage actuels tout comme pour réaliser le coffret objet du brevet US 4.906.059 et le dispositif de mesure centralisée objet du brevet EP 0.227.498, on utilise des composants standards généralement normalisés.

Ces différents organes sont connectés entre eux au moyen de câbles, de bornes de liaison électrique, ou bien encore de modules de branchement qui sont associés à des isolateurs et/ou à des coffrets isolés.

On peut ainsi réaliser des configurations électriques associées à chaque type de branchement. C'est ainsi qu'en fonction de la présence d'un ou deux sectionnements et en fonction des contraintes liées au passage des différents câbles, on confectionne des armoires électriques qui correspondent aux configurations suivantes :
- passage dit "en N" résultant d'une entrée des câbles venant du réseau d'alimentation dans le bas du tableau et une sortie des câbles d'alimentation en direction du réseau de distribution de l'abonné par le bas du tableau,
- passage dit "en U" résultant d'une entrée des câbles venant du réseau de distribution par le haut du tableau et une sortie des câbles en direction du réseau d'alimentation de l'abonné par le haut du tableau,
- passage dit "en I (H)" résultant d'une entrée des câbles venant du réseau d'alimentation par le haut du tableau et une sortie des câbles d'alimentation en direction de l'abonné par le bas du tableau,
- passage dit "en I (B)" résultant d'une entrée des câbles venant du réseau d'alimentation par le bas du tableau et une sortie des câbles alimentant le réseau de l'abonné par le haut du tableau.

Pour réaliser toutes ces configurations, il n'existe aucune solution qui ne nécessite pas une utilisation de nombreuses pièces et d'organes spécifiques, tels que par exemple des modules spéciaux ou des pièces de connexion adaptées. Ceci a pour conséquence qu'il n'existe pas aujourd'hui un tableau standard qui réponde à toutes les configurations de branchement.

Par ailleurs, toutes ces armoires ainsi réalisées présentent l'inconvénient d'être très volumineuses et il n'est pas toujours aisé de les installer en raison du peu de place souvent disponible dans les différentes installations électriques. En effet, la connexion de tous ces câbles ne peut se faire qu'en combinant souvent hors du tableau un grand nombre de câbles différents, ce qui nécessite la mise en place de nombreuses pièces de connexion complémentaires ou pose des problèmes de raccordement lors de l'épanouissement des câbles de branchement.

Il faut également noter que la multiplication des connexions électriques entre les câbles accroît les risques d'échauffement thermique par mauvais contact et donc diminue la fiabilité de l'installation.

Enfin de tels schémas de montage sont souvent fastidieux à réaliser et d'un coût qui peut être élevé, notamment en raison de l'utilisation de nombreuses pièces et/ou organes complémentaires.

Le but de la présente invention est de fournir une armoire électrique qui remédie aux inconvénients des dispositifs actuellement utilisés.

En outre, le tableau électrique selon l'invention permet la mise en place de toutes les configurations de montage électrique à partir de mêmes éléments standards sans utilisation de pièces spécifiques ou d'organes appropriés.

En effet, le tableau de comptage selon l'invention a l'avantage de n'utiliser qu'un seul type de pièces de liaison pour réaliser toutes les configurations de montage. Le tableau de comptage est par conséquent facilement adaptable à toutes les situations de schémas électriques.

Il a aussi l'avantage d'être évolutif puisque l'on peut, à tout moment, modifier la configuration de montage de départ pour, par exemple, intégrer un deuxième sectionnement.

Un autre but du tableau électrique selon l'invention réside dans le fait qu'il permet de supprimer de nombreux contacts électriques intermédiaires et de ce fait, de diminuer les risques d'échauffement permanents ou accidentels. Cette diminution des risques d'échauffement susceptible d'entraîner la dégradation des connexions électriques accroît considérablement la fiabilité de tels tableaux.

Un autre but de la présente invention est qu'il permet de limiter l'encombrement des pièces disposées à l'intérieur du boîtier et donc de limiter l'encombrement du tableau lui-même, ce qui facilite sa mise en place dans des places limitées.

Un autre but du tableau réside dans le fait qu'il est standard et qu'il est compatible avec tous les dispositifs actuellement utilisés de sorte qu'il ne nécessite aucune transformation pour son installation notamment lors du remplacement des armoires actuellement utilisées.

Un autre but de la présente invention réside également dans le fait qu'il est très économique et qu'il est facile à mettre en place.

D'autres buts et avantages de la présente invention apparaîtront au cours de la description qui va suivre, qui n'est donnée qu'à titre indicatif et qui n'a pas pour but de la limiter.

L'invention a pour objet un tableau de comptage triphasé destiné notamment à la distribution de l'énergie électrique comprenant des câbles permettant la livraison d'énergie depuis un réseau de distribution électrique jusqu'à l'alimentation d'un abonné, comprenant :
- une armoire
- un groupe de mesure placé à l'intérieur de l'armoire et destiné à fournir aux compteurs des signaux proportionnels à la puissance instantanée délivrée à l'abonné,
qui se caractérise par le fait qu'il présente :
- des moyens de connexion électriques et des moyens de raccordement au réseau de distribution et à l'alimentation de l'abonné supportés par au moins deux et au plus trois pièces de liaison constituées par des barreaux longitudinaux amovibles.
- des moyens de maintien constitués par une plaque de fond comportant des organes d'accrochage pour la faire coopérer avec chacune des pièces de liaison, autorisant une combinaison dans un espace restreint de configurations distinctes de montages électriques.

L'invention sera mieux comprise si l'on se réfère à la description ci-dessous ainsi qu'aux dessins en annexe qui en font partie intégrante.

La figure 1 est une vue schématique illustrant une pièce de liaison (10).

La figure 2 est une vue schématique de profil illustrant partiellement une pièce de liaison similaire à celle de la figure 1.

La figure 3 est une vue schématique illustrant une variante de réalisation d'une pièce de liaison (20).

La figure 4 est une vue schématique de profil illustrant partiellement une pièce de liaison identique à celle de la figure 3.

La figure 5 est une vue schématique d'une variante de réalisation d'une pièce de liaison (30).

Les figures 6 et 7 sont des vues schématiques de profil illustrant partiellement deux formes de réalisation de la pièce de liaison de la figure 5.

Les figures 8 et 9 sont des vues schématiques illustrant deux types de montage électrique à partir des pièces conformes à l'invention.

La figure 10 est un tableau récapitulatif des différentes configurations des schémas électriques susceptibles d'être réalisées au moyen de l'invention.

La présente invention a pour objet un tableau électrique de comptage de courant triphasé destiné aux secteurs industriels associés à la distribution de courant depuis un réseau de distribution jusqu'à une installation d'un abonné.

La distribution du courant électrique depuis le réseau de distribution s'effectue au moyen de câbles qui sont connectés à au moins un dispositif de comptage de l'énergie ainsi qu'à des organes électriques associés aux câbles de transmission de l'énergie électrique vers l'installation de l'abonné.

L'énergie qui est fournie à l'abonné par le réseau de distribution à basse tension correspond à des courants généralement compris entre 50 et 500 ampères. Pour ce type de distribution, on dispose un tableau de comptage qui constitue une interface entre le réseau public de distribution et l'installation privée de l'abonné.

Ce tableau a notamment une double fonction qui consiste à :
- permettre d'isoler l'installation de l'abonné du réseau de distribution général au moyen d'un dispositif de coupure de préférence condamnable,
- délivrer aux compteurs d'énergie et autres dispositifs de mesure ou de protection placés au point de livraisons à l'abonné, des signaux proportionnels à la puissance instantanée livrée par l'abonné, par exemple par l'intermédiaire de réducteurs de courant.

Les composants électriques du tableau de comptage sont placés à l'intérieur d'une armoire (1) de forme généralement parallèlépipédique. La forme et les dimensions de l'armoire (1) sont variables en fonction de l'utilisation ainsi que du matériau dans lequel elle est réalisée. Par exemple, cette armoire (1) peut être réalisée en métal ou en alliage métallique généralement traité en surface pour éviter les phénomènes de corrosion ou bien encore dans une matière plastique dure, électriquement isolante.

Cette armoire (1) comprend d'une part une porte mobile sur laquelle peuvent être installés les compteurs et d'autre part le tableau de comptage (2) situé à l'intérieur et qui est constitué par un groupe de mesure (4) et des éléments de connexion et de sectionnement (10, 20, 30) fixés sur le fond de l'armoire (3).

Ce groupe de mesure électrique (4) est constitué par exemple par trois réducteurs de courant simples ou multi-rapports à couteaux débrochables et d'une cartouche fusible ou d'une barrette de neutre ou bien encore d'un ensemble triphasé monobloc de réducteur de courant à simple ou à multi-rapports ou encore de tout dispositif électrique ou électronique fournissant un signal fonction de l'énergie circulant dans les câbles de puissance.

Par ailleurs, le fond de l'armoire (3) comporte des moyens de maintien et de retenue (5) des pièces de liaison (10, 20, 30) qui présentent des organes d'accrochage (8) tels que des ergots, des tétons ou des inserts venant coopérer avec des organes complémentaires (9) de la pièce (6) afin d'assurer son maintien dans une position stable.

Bien entendu, selon la forme de réalisation, on peut envisager que le fond de l'armoire (3) soit amovible ou non. Dans le cas d'une plaque de fond amovible, elle est fixée et assujettie dans le fond de l'armoire (1) par toute technique appropriée telle que le boulonnage, rivetage, vissage, soudure, collage, etc. Cette plaque de fond (3) peut être réalisée selon un matériau identique à celui de l'armoire (1) ou bien dans un matériau distinct qui présente des caractéristiques d'isolation électrique.

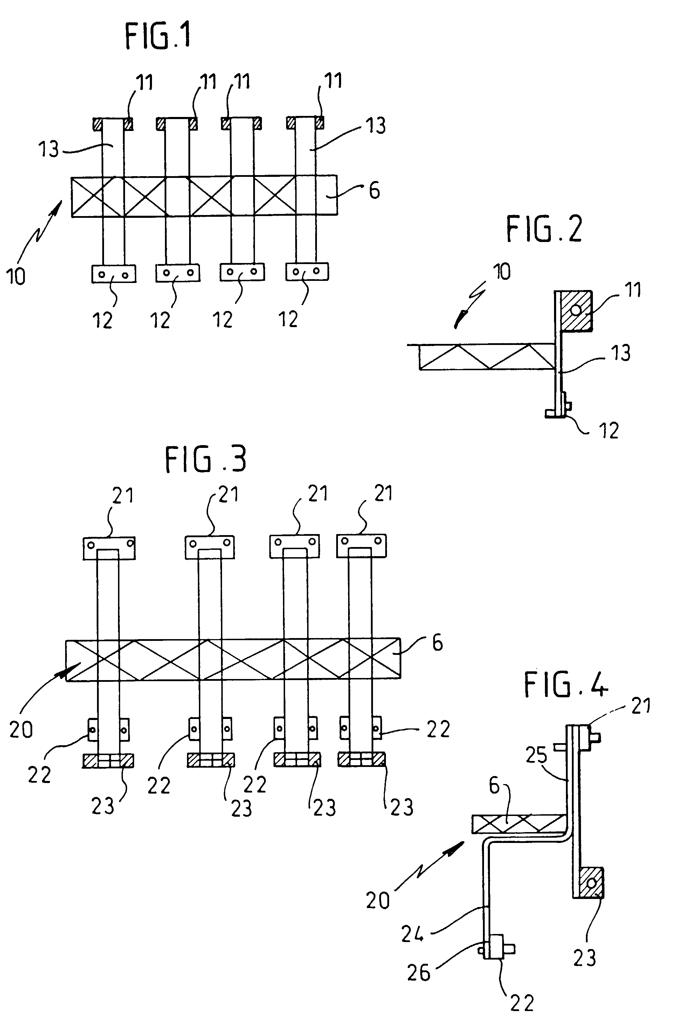

Si l'on se réfère aux figures 1 et 2, on voit plus particulièrement une forme de réalisation de la pièce de liaison (10). Cette pièce de liaison (10) est réalisée en un matériau électriquement isolant et constitue un barreau longitudinal (6) qui supporte des moyens de connexion. Ce barreau longitudinal (6) présente sur au moins une partie de sa surface des logements destinés à coopérer de part et d'autre d'un plan médian horizontal avec des moyens de connexion électrique. Dans cette forme de réalisation, ce barreau (6) coopère avec quatre organes de raccordement (11) ou bien encore quatre serre-câbles ainsi qu'avec quatre mâchoires de connexion (12) d'un type classique et connu, couramment utilisées pour réaliser ce type de liaison électrique.

Chaque mâchoire électrique de connexion (12) est disposée en regard d'un organe de raccordement (11) de part et d'autre d'un plan médian horizontal en étant assujettis entre eux par une pièce support (13) qui vient se loger à l'intérieur des logements ménagés dans le corps du barreau (6).

Une variante de réalisation de la pièce de liaison (20) est plus particulièrement illustrée aux figures 3 et 4. Dans cette forme de réalisation, cette pièce (20) comporte un corps (6) qui est réalisé en un matériau électriquement isolant. Il présente, d'une part, quatre mâchoires serre-câbles (21) supérieures et quatre mâchoires serre-câbles (22) inférieures et, d'autre part, quatre organes de connexion (23) d'un type classique et connu.

Chaque mâchoire serre-câble supérieure (21) est disposée en regard d'une mâchoire serre-câble inférieure (22) au moyen d'une pièce support (24) placée à l'intérieur d'un logement du corps (6). Cette pièce (24) comporte une partie rectiligne médiane dont chaque extrémité présente une partie recourbée (25, 26) perpendiculairement en faisant saillie en sens opposé l'une de l'autre. A l'extrémité de la partie recourbée vers le haut (25) est assujettie une mâchoire serre-câble (21) et à l'extrémité de la partie recourbée vers le bas (26) est assujettie une mâchoire serre-câble (22).

Chaque organe de connexion (23) est placé en regard de part et d'autre d'un plan médian horizontal d'une mâchoire serre-câble électrique (21) supérieure en étant assujettis sur une pièce support (24) placée à l'intérieur d'un logement ménagé sur le corps (6) de la pièce de liaison (20).

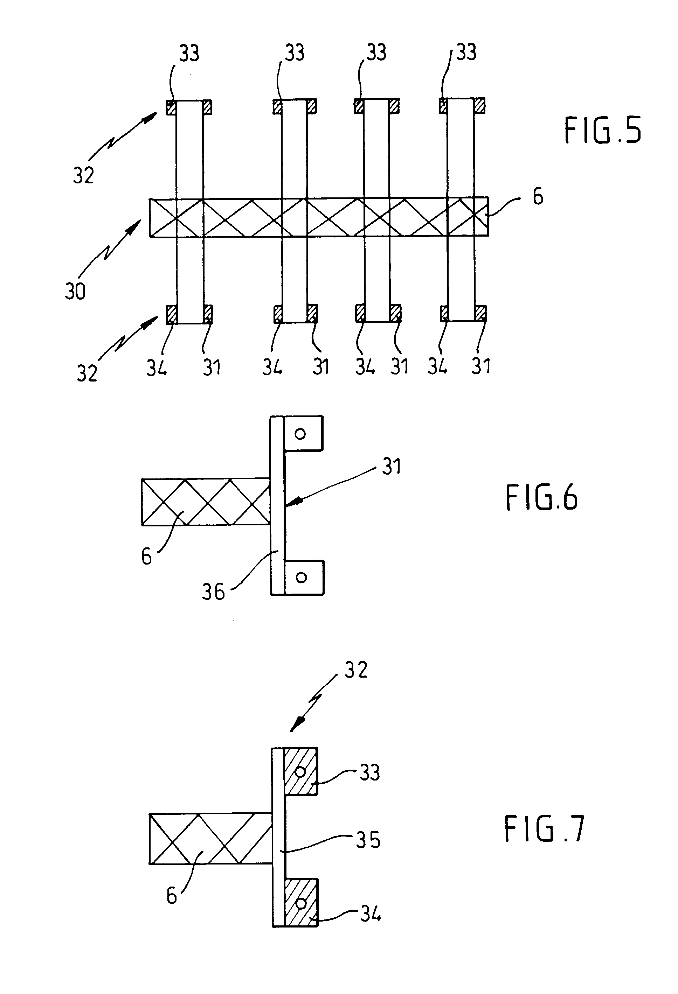

Une autre forme de réalisation de la pièce de liaison (30) est plus particulièrement illustrée aux figures 5, 6 et 7. Dans cette forme de réalisation, cette pièce comporte un corps (6) qui est réalisé également en un matériau électriquement isolant sous la forme d'un barreau amovible. Ce corps (6) comporte quatre organes de connexion doubles (31) tels que ceux plus particulièrement illustrés à la figure 6 ou bien huit organes de connexion simples (32) reliés entre eux par une pièce support (35) assujettie au corps (6) par des techniques classiques, telles qu'illustrées à la figure 7.

Lorsque le corps (6) comporte huit organes de connexion simples (32), ceux-ci sont disposés en quatre organes de connexion supérieurs (33) et quatre organes de connexion inférieurs (34) placés de part et d'autre d'un plan médian horizontal. Chaque organe de connexion supérieur (33) est assujetti à un organe de connexion inférieur (34) par une pièce support (35) qui vient se loger à l'intérieur d'un logement ménagé dans le corps (6) comme montré à la figure 7.

Lorsque le corps (30) comporte quatre organes de connexion doubles (31), chaque organe (31) est assujetti sur une pièce support (36) placée dans un logement ménagé dans le corps comme illustré à la figure 7.

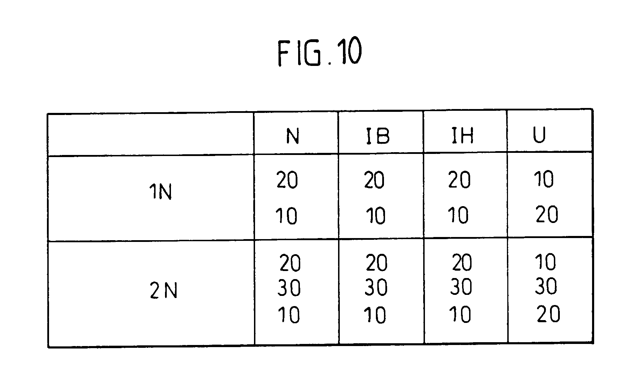

Ainsi, selon l'invention, à partir de pièces de liaison (10, 20, 30) qui présentent différentes formes de réalisation, il est possible de concevoir l'ensemble des combinaisons des schémas de montage électrique présenté en figure 10.

Cette diminution du nombre de pièces utilisées permet un gain de place appréciable ainsi qu'une diminution considérable des dimensions du boîtier. Il en résulte que l'on peut placer aisément ce tableau dans de petits espaces ce qui favorise sa mise en place.

Par ailleurs, en réduisant le nombre de pièces utilisées, on supprime un grand nombre de contacts électriques intermédiaires entre les câbles de distribution et le câble de l'abonné. Il en résulte une diminution de l'échauffement et donc une plus grande fiabilité de l'armoire électrique.

Il faut également noter que le tableau selon l'invention peut être placé de façon standard dans tout type d'installation même en remplacement de celles existantes puisqu'il est parfaitement normalisé aux exigences de la législation dans ce domaine.

Le tableau (2) selon l'invention peut être mis en oeuvre pour assurer la distribution électrique à partir d'un réseau électrique public vers une installation d'un abonné, quel que soit le choix du montage électrique, c'est-à-dire quel que soit le nombre de sectionnements et/ou le sens d'arrivée et de départ des différents câbles électriques à l'intérieur du boîtier.

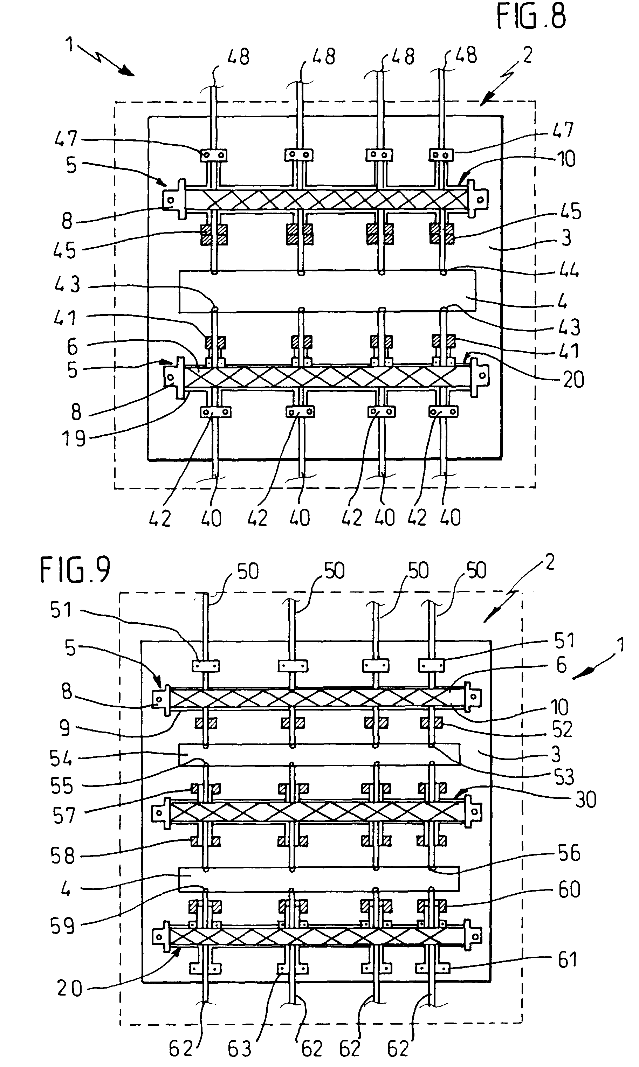

C'est ainsi qu'à la figure 8, on a représenté un tableau (2) dont le montage électrique comporte un unique sectionnement.

Ce tableau (2) comporte un fond (3) sur lequel est placé un groupe de mesure (4). Quatre câbles (40) provenant du réseau de distribution arrivent dans le bas du tableau (2). Ils sont connectés aux bornes d'entrée (43) de l'unité de comptage (4) au moyen d'une pièce de liaison (20) telle que celle représentée aux figures 3 et 4. Ainsi, chaque câble (40) est relié, d'une part, par un serre-câble (41) et, d'autre part, par un organe de raccordement (42) à chacune des bornes d'entrée (43) de l'unité de comptage (4).

A la sortie du groupe de mesure (4), chaque câble (48) est connecté par une pièce de liaison (10) telle que celle illustrée aux figures 1 et 2 au réseau de distribution de l'abonné. Pour cela, chaque câble (48) est relié par une pièce de connexion (45) à chacune des bornes de sortie (44) du groupe de mesure (4) et par une mâchoire serre-câble (47) à l'entrée de l'installation électrique de l'abonné.

A la figure 9 est représenté un tableau (2) dont le schéma comporte deux sectionnements.

Dans ce schéma, quatre câbles (50) provenant du réseau de distribution arrivent dans le haut du tableau (2). Chaque câble (50) est connecté par un serre-câble (51) et d'autre part par un organe de raccordement (52) à chacune des bornes d'entrée (53) d'un fusible (54) au moyen d'une pièce de liaison (10) telle que celle qui est plus particulièrement illustrée aux figures 1 et 2.

A la sortie, chaque fusible (54) est connecté depuis chaque borne de sortie (55) du fusible (54) à chacune des bornes d'entrée (56) de l'unité de comptage (4) au moyen d'une pièce de liaison (30), telle que celle qui est plus particulièrement illustrée aux figures 5, 6 et 7, d'une part par une mâchoire (57) et d'autre part par un organe de connexion (58).

A la sortie du groupe de mesure (4), chaque câble (62) est connecté à chaque borne de sortie (59) au moyen d'une pièce de liaison (20) telle que celle qui est plus particulièrement illustrée aux figures 3 et 4, d'une part, par un organe de connexion (60) et, d'autre part, par une mâchoire serre-câble (61) dans le cas d'une sortie par le bas. Le câble de sortie (62) pourrait repartir vers le haut s'il était connecté à la mâchoire inférieure (63) de la pièce de liaison (20).

Bien entendu, il est tout à fait envisageable de réaliser d'autres types de schémas électriques à partir de l'invention, c'est ainsi que pour illustrer ces différents montages, on a représenté ceux-ci dans un tableau à la figure 10.

Dans ce tableau, on désigne par :
- (10) une pièce de liaison telle que celle qui est illustrée aux figures 1 et 2,
- (20) une pièce de liaison telle que celle qui est illustrée aux figures 3 et 4,
- (30) une pièce de liaison conforme à celle qui est illustrée aux figures 5 à 7,
- N schéma résultant d'une entrée des câbles venant du réseau de distribution par le bas du tableau et une sortie des câbles d'alimentation en direction de l'abonné par le bas du tableau,
- I B schéma résultant d'une entrée des câbles venant du réseau de distribution par le bas du tableau et une sortie des câbles d'alimentation en direction de l'abonné par le haut du tableau,
- I H schéma résultant d'une entrée des câbles venant du réseau de distribution par le haut du tableau et une sortie des câbles en direction du réseau d'alimentation de l'abonné vers le bas du tableau,
- U schéma résultant d'une entrée des câbles venant du réseau de distribution par le haut du tableau et une sortie des câbles en direction du réseau d'alimentation de l'abonné par le haut du tableau,
- 1N schéma comportant un unique sectionnement,
- 2N schéma comportant deux sectionnements.

Si l'on se réfère à ce tableau, on voit les différents schémas susceptibles d'être réalisés ainsi que la répartition et l'ordre des pièces utilisées pour assurer la mise en place des différents câbles dans un espace le plus restreint possible.

Toutefois, il faut noter que ces différentes formes de réalisation ne sont aucunement limitatives et que l'on peut, en fonction des besoins, modifier l'ordre d'assemblage des différentes pièces de liaison utilisées.

## Revendications

1. Tableau de comptage triphasé destiné notamment à la distribution de l'énergie électrique comprenant des câbles permettant la livraison d'énergie depuis un réseau de distribution électrique jusqu'à l'alimentation d'un abonné, comprenant :
- une armoire (1)
- un groupe de mesure (4) placé à l'intérieur de l'armoire et destiné à fournir aux compteurs des signaux proportionnels à la puissance instantanée délivrée à l'abonné,
caractérisé par le fait qu'il présente :
- des moyens de connexion électriques et des moyens de raccordement au réseau de distribution et à l'alimentation de l'abonné supportés par au moins deux et au plus trois pièces de liaison (10, 20, 30) constituées par des barreaux longitudinaux (6) amovibles,
- des moyens de maintien (5) constitués par une plaque de fond (3) comportant des organes d'accrochage pour la faire coopérer avec chacune des pièces de liaison, autorisant une combinaison dans un espace restreint de configurations distinctes de montages électriques.

2. Tableau selon la revendication 1, caractérisé en ce que la plaque de fond (3) est amovible en étant placée à l'intérieur de l'armoire (1).

3. Tableau selon la revendication 1, caractérisé en ce que la plaque de fond (3) est constituée par le fond de l'armoire (1).

4. Tableau selon la revendication 1, caractérisé en ce que la pièce de liaison (10) constitue un barreau longitudinal (6) dont le corps présente des logements destinés à recevoir des organes de raccordement (11) et des organes de connexion (12) placés en regard de part et d'autre d'un plan médian horizontal en étant assujettis entre eux par une pièce support (13).

5. Tableau selon la revendication 1, caractérisé en ce que la pièce de liaison (20) constitue un barreau longitudinal (6) dont le corps présente des logements destinés à recevoir d'une part quatre mâchoires serre-câbles inférieures (22) assujetties entre elles au moyen d'une pièce support (24) et, d'autre part, quatre organes de connexion (23) disposés en regard de quatre mâchoires serre-câbles supérieures (21) de part et d'autre d'un plan médian horizontal au moyen d'une pièce support (24).

6. Tableau selon la revendication 1, caractérisé en ce que la pièce de liaison (30) constitue un barreau longitudinal (6) dont le corps présente des logements destinés à recevoir d'une part quatre organes de connexion simples supérieurs (33) et d'autre part quatre organes de connexion simples inférieurs (34) disposés de part et d'autre d'un plan médian horizontal en étant assujettis entre eux au moyen d'une pièce support (35) et fixé au barreau (6) par tout moyen adéquat (36).

7. Tableau selon la revendication 1, caractérisé en ce que la pièce de liaison (30) constitue un barreau longitudinal (6) dont le corps présente des logements destinés à recevoir quatre pièces de connexion doubles (31) qui sont fixées au barreau par tout moyen adéquat (36).

8. Tableau selon la revendication 1, caractérisé en ce que le groupe de mesure (4) comporte trois réducteurs de courant à simple ou multi-rapports à couteaux débrochables et une cartouche neutre.

9. Tableau selon la revendication 1, caractérisé en ce que le groupe de mesure (4) comporte un réducteur de courant triphasé monobloc simple ou à multi-rapports.

10. Tableau selon la revendication 1, caractérisé par un dispositif électrique ou électronique délivrant des signaux fonction de la puissance instantanée fournie à l'abonné.

11. Tableau selon la revendication 1, caractérisé en ce que toutes les solutions de connexion combinant entrée par le haut ou par le bas et sortie par le haut ou sortie par le bas soient réalisables sans l'utilisation de pièces supplémentaires au seul fond et aux seules pièces (10, 20, 30).

12. Tableau selon la revendication 1, caractérisé par le fait qu'il peut posséder un sectionnement ou deux sectionnements.

## Patentansprüche

1. Schalttafel für Drehstromzähler, nämlich für die elektrische Stromversorgung, die Kabel umfaßt, die den Stromzufuhr von einem elektrischen Stromversorgungsnetz zur Stromleitung eines Verbrauchers erlaubt, umfassend:
- einen Kasten (1),
- ein innerhalb des Kastens angebrachtes Meßaggregat (4), das dazu bestimmt ist, den Zählern Signale im Verhältnis zur dem Verbraucher zugeführten Momentanstromstärke zuzuführen,
dadurch gekennzeichnet, daß sie:
- elektrische Verbindungsmittel und Mittel zum Anschluß an das Versorgungsnetz und an die Stromleitung des Verbrauchers, die von wenigstens zwei und höchstens drei Verbindungsteilen (10, 20, 20) unterstützt werden, die aus herausnehmbaren Längsstäben (6) bestehen,
- Haltemittel (5), die aus einer Bodenplatte (3) bestehen, die Kupplungsorgane umfaßt, um sie mit jedem der Verbindungsteile zusammenwirken zu lassen, wobei eine Kombination von unterschiedlichen, elektrischen Montagekonfigurationen innerhalb eines beschränkten Raumes ermöglicht wird,
umfaßt.

2. Schalttafel nach Anspruch 1, dadurch gekennzeichnet, daß die Bodenplatte (3) abnehmbar ist, wobei sie in den Kasten (1) angebracht ist.

3. Schalttafel nach Anspruch 1, dadurch gekennzeichnet, daß die Bodenplatte (3) von dem Bodem des Kastens (1) gebildet ist.

4. Schalttafel nach Anspruch 1, dadurch gekennzeichnet, daß der Verbindungsteil (10) einen Längsstab (6) bildet, dessen Körper Aussparungen aufweist, die dazu bestimmt sind, Verbindungsorgane (11) und Verbindungsorgane (12) aufzunehmen, die beiderseits einer waagerechten Mittelebene einander gegenüber angebracht sind, wobei sie über einen Tragteil (13) mit einander verbunden sind.

5. Schalttafel nach Anspruch 1, dadurch gekennzeichnet, daß der Verbindungsteil (20) einen Längsstab (6) bildet, dessen Körper Aussparungen aufweist, die dazu bestimmt sind, einerseits, vier mittels eines Tragteils (24) mit einander verbundene, untere Kabelhalterungsplatten (22) und, andererseits, vier Verbindungsorgane (23) aufzunehmen, die durch einen Tragteil (24) beiderseits einer waagerechten Mittelebene gegenüber vier oberen Kabelhalterungsplatten (21) angeordnet sind.

6. Schalttafel nach Anspruch 1, dadurch gekennzeichnet, daß der Verbindungsteil (30) einen Längsstab (6) bildet, dessen Körper Aussparungen aufweist, die dazu bestimmt sind, einerseits, vier obere, einzelne Verbindungsorgane (33) und, andererseits, vier untere einzelne Verbindungsorgane (34) aufzunehmen, die beiderseits einer waagerechten Mittelebene angeordnet sind, wobei sie mittels eines Tragteils (35) miteinander und über irgendwelche geeigneten Mittel (36) am Stab (6) befestigt sind.

7. Schalttafel nach Anspruch 1, dadurch gekennzeichnet, daß der Verbindungsteil (30) einen Längsstab (6) bildet, dessen Körper Aussparungen aufweist, die dazu bestimmt sind, vier Doppelverbindungsteile (31) aufzunehmen, die über irgendwelche geeigneten Mittel (36) am Stab befestigt sind.

8. Schalttafel nach Anspruch 1, dadurch gekennzeichnet, daß das Meßaggregat (4) drei Ein- oder Mehrverhältnis-Stromteilern mit ausziehbaren Klingen und einer Neutralpatrone umfaßt.

9. Schalttafel nach Anspruch 1, dadurch gekennzeichnet, daß das Meßaggregat (4) einen einstückigen Ein- oder Mehrverhältnis-Drehstromteiler umfaßt.

10. Schalttafel nach Anspruch 1, gekennzeichnet durch eine elektrische oder elektronische Vorrichtung, die Signale im Verhältnis zur dem Verbraucher zugeführten Momentanstromstärke liefert.

11. Schalttafel nach Anspruch 1, dadurch gekennzeichnet, daß die sämtlichen Verbindungslösungen, die Eintritt am oberen oder am unteren Teil und Austritt am oberen oder am unteren Teil kombinieren, ohne Einsatz von Teilen zusätzlich zu nur dem Bodem und den Teilen (10, 20, 30) angewandt werden können.

12. Schalttafel nach Anspruch 1, dadurch gekennzeichnet, daß sie einen oder zwei Trennschalter umfassen kann.

## Claims

1. Triphase meter panel, viz. for the electric power supply, comprising cables allowing the supply of power from an electric power-supply network to the feeder of a consumer, including:
- a box (1),
- a measuring group (4) placed inside the box and aimed at supplying to the meters signals proportional to the instantaneous power supplied to the consumer,
characterized in that it has:
- electric connecting means and means for connecting to the power-supply network and to consumer's feeder supported by at least two and a maximum of three connecting parts (10, 20, 30) formed by removable longitudinal bars (6),
- holding means (5) formed by a bottom plate (3) including coupling organs in order to cause same to co-operate with each of the connecting parts, authorizing a combination, within a restricted space, of different electric connecting configurations.

2. Panel according to claim 1, characterized in that the bottom plate (3) is removable, whilst being placed inside the box (1).

3. Panel according to claim 1, characterized in that the bottom plate (3) is formed by the bottom of the box (1).

4. Panel according to claim 1, characterized in that the connecting part (10) forms a longitudinal bar (6) the body of which has recesses aimed at receiving connecting organs (11) and connecting organs (12) placed in front of each other, on both sides of a horizontal median plane, whilst being fastened to each other through a supporting part (13).

5. Panel according to claim 1, characterized in that the connecting part (20) forms a longitudinal bar (6) the body of which has recesses aimed at receiving, on the one hand, four lower cable clamp-plates (22) fastened to each other by means of a supporting part (24) and, on the other hand, four connecting organs (23) arranged in front of four upper cable clamp-plates (21), on both sides of a horizontal median plane, by means of a supporting part (24).

6. Panel according to claim 1, characterized in that the connecting part (30) forms a longitudinal bar (6) the body of which has recesses aimed at receiving, on the one hand, four upper single connecting organs (33) and, on the other hand, four lower single connecting organs (34) arranged on both sides of a horizontal median plane, whilst being fastened to each other by means of a supporting part (35) and secured to the bar (6) by any adequate means (36).

7. Panel according to claim 1, characterized in that the connecting part (30) forms a longitudinal bar (6) the body of which has recesses aimed at receiving four double connecting parts (31) which are fixed to the bar by any adequate means (36).

8. Panel according to claim 1, characterized in that the measuring group (4) includes three single- or multi-ratio current reducers with unpluggable blades and a neutral cartridge.

9. Panel according to claim 1, characterized in that the measuring group (4) includes a solid single- or multi-ratio triphase current reducer.

10. Panel according to claim 1, characterized by an electric or electronic device delivering signals as a function of the instantaneous power supplied to the consumer.

11. Panel according to claim 1, characterized in that all the connection solutions combining incoming at the top or at the bottom and outgoing at the top or at the bottom can be implemented without the use of additional parts apart from only the bottom and the parts (10, 20, 30).

12. Panel according to claim 1, characterized in that it may include one disconnector or two disconnectors.
